Europäisches Patentamt

European Patent Office

Office européen des brevets

(11) Veröffentlichungsnummer: **0 057 735**

**A1**

(12) **EUROPÄISCHE PATENTANMELDUNG**

(21) Anmeldenummer: **81100824.2**

(22) Anmeldetag: **05.02.81**

(51) Int. Cl.³: **F 04 B 45/04**
**H 02 K 7/14**

(43) Veröffentlichungstag der Anmeldung:
**18.08.82 Patentblatt 82/33**

(84) Benannte Vertragsstaaten:
**AT BE CH DE FR GB IT LI NL SE**

(71) Anmelder: **SIKO GmbH Dr. Ing. G. Wandres**

**D-7801 Buchenbach(DE)**

(72) Erfinder: **Halouska, Milan**
**Wirthstrasse 8**
**D-7800 Freiburg(DE)**

(72) Erfinder: **Wandres, Claus, Dipl.-Ing.**
**Weihermattenweg 6**
**D-7801 Buchenbach-Unteribental(DE)**

(74) Vertreter: **Charrier, Rolf, Dipl.-Ing.**
**Postfach 260 Rehlingenstrasse 8**
**D-8900 Augsburg 31(DE)**

(54) **Membrankompressor und Verfahren zu seiner Montage.**

(57) Für die Betriebswerte eines Membrankompressors ist mitbestimmend die Lage des Hubes der Membran (3) relativ zum Kompressorgehäuse (1) bzw. zum Kompressorkopf (2). Um die Lage dieses Hubes einstellen zu können, ist der Motor (4), der über einen Exzenter (8) und ein Pleuel (11, 12) die Membran (3) auf- und abwärts bewegt, mit einer Traverse (20) verbunden, die in Nuten (22) am Gehäuse (1) verschiebbar und damit justierbar eingesteckt ist.

Fig 1

EP 0 057 735 A1

Dipl.-Ing.
*Rolf Charrier*
Patentanwalt

Rehlingenstraße 8 · Postfach 260
D-8900 Augsburg 31
Telefon 08 21/3 60 15 + 3 60 16
Telex 53 3 275
Postscheckkonto: München Nr. 1547 89-801

8227/06/Ch/Ha                      Augsburg, den 3. Februar 1981


SIKO GmbH
Dr. Ing. G. Wandres

7801 Buchenbach


Membrankompressor und Verfahren zu
seiner Montage


Die Erfindung betrifft einen Membrankompressor, bei dem
eine elastische Membran durch einen Pleuel auf- und abwärts bewegt wird, das Pleuel über einen Exzenter mit einer
Motorwelle verbunden ist und die Membran und der Motor
von einem Kompressorgehäuse gehalten werden.

Bei den bekannten Membrankompressoren sind am Kompressorgehäuse Befestigungsstellen für den Motor vorgesehen, mittels
denen der Motor am Kompressorgehäuse beispielsweise mittels
Schrauben befestigt wird. Weiterhin wird üblicherweise die
Membran zwischen dem Kompressorgehäuse und dem Kompressorkopf festgeklemmt.

Die Leistung und der erzeugte Druck des Kompressors werden
mitbestimmt durch die Lage des Hubs der Membran relativ zum
Gehäuse. Diese Lage wird wiederum bestimmt durch die Lage
des Motors im Kompressorgehäuse und durch die verschiedenen
Fertigungstoleranzen beim Gehäuse, beim Pleuel und dessen

-2-

Lagerung, beim Membranteller und bei den Befestigungsteilen, über die die Membran mit dem Pleuel verbunden ist. Bei den bekannten Membrankompressoren
variieren in Folge dieser Fertigungstoleranz Druck
und Leistung in einem relativ weiten Bereich. Diese
Werte sind erst nach völliger Montage des Kompressors
ermittelbar. Bei Kompressoren, deren Druck- und/oder
Leistungswerte einen gegebenen Toleranzbereich unterschreiten, ist es erforderlich, eine teilweise Demontage
des Kompressors vorzunehmen, um durch Beigabe von Unterlegscheiben beispielsweise im Bereich der Befestigungsvorrichtung zwischen Pleuel und Membran die Lage des
Hubs der Membran relativ zum Gehäuse verändern zu können.
Derartige Justierarbeiten sind sehr aufwendig und erfordern ein hohes Maß an Geschick und Erfahrung, da die
Dicke der jeweils beigegebenen Unterlagsscheibe  bestimmend
ist für die Veränderung der Lage des Hubs der Membran
relativ zum Gehäuse.

Durch die Vielzahl der Schraubverbindungen zwischen
Motor und Gehäuse, zwischen Motorwelle und Pleuel und
zwischen Pleuel und Membran ist bei den bekannten Membrankompressoren insgesamt die Montage sehr aufwendig.

Es besteht die Aufgabe, den Membrankompressor so auszubilden, daß bei einfacher Montage eine unproblematische
Justiermöglichkeit der Lage des Hubs der Membran relativ
zum Gehäuse gegeben ist.

Gelöst wird diese Aufgabe mit den Merkmalen des Anspruches
1. Vorteilhafte Ausgestaltungen sind den Unteransprüchen
entnehmbar. Beansprucht wird auch ein Verfahren zur Montage
und Justage des Erfindungsgemäßen Membrankompressors.

8227/06/Ch/Ha                    -3-                3. Februar 1981

Ein Ausführungsbeispiel wird nachfolgend anhand der
Zeichnungen näher erläutert. Es zeigen:

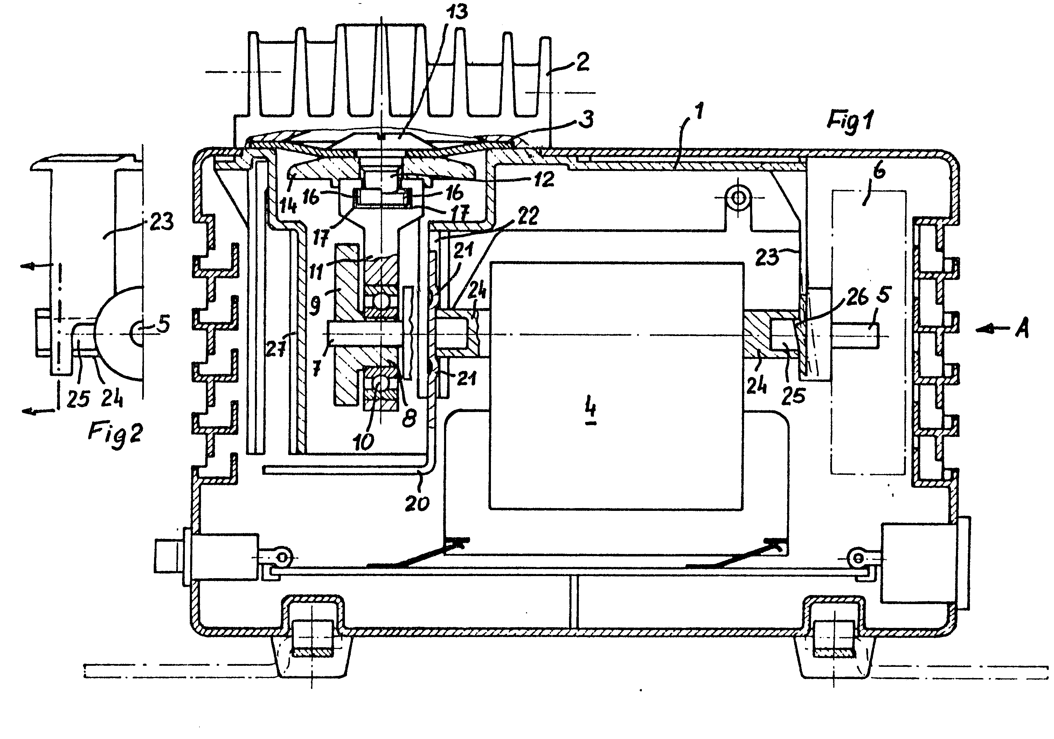

Fig. 1 einen Längsschnitt durch den Kompressor, bei
dem die vorderen und hinteren Befestigungspunkte des
Motors im Bereich der dortigen Befestigungsteile geschnitten dargestellt sind;

Fig. 2 eine Ansicht eines hinteren Befestigungspunkts,
gesehen in Pfeilrichtung A in Fig. 1 mit einer Darstellung der Schnittlage I-I der Befestigungspunkte
nach Fig. 1

Fig. 3 Teil eines Längsschnitts durch die Traverse im
Bereich der Motorwelle mit um 90$^o$ gedreht dargestellter Renkverbindung zwischen den Pleuelteilen

Fig. 4 eine Ansicht von unten auf den Membranteller.

Auf das Gehäuse 1 ist ein Kompressorkopf 2 aufgesetzt,
wobei zwischen Kompressorkopf 2 und Gehäuse 1 die Membran
3 festgeklemmt ist. Die Bereiche des Membrankopfes 2
außerhalb des Rands der Membran 3 stehen in metallischem
Kontakt zu dem Kompressorgehäuse 1 , welches bevorzugt
ein Spritzgußteil ist.

Das hintere Ende 5 der Motorwelle des Motors 4 trägt einen
Ventilator 6 zur Belüftung des Gehäuseinnern. Auf das
vordere Ende 7 der Motorwelle ist ein Exzenter 8 aufgesetzt,
der einstückig zu einer Masseausgleichsscheibe 9 ist.
Die Verbindung zwischen dem Exzenter 8 mit Masseausgleichsscheibe 9 und dem Wellenende 7 erfolgt bevorzugt über
eine Klebeverbindung. Den Exzenter 8 umgibt ein Kugellager 10.

-4-

auf welches außen ein Pleuelauge des unteren Teils 11 des
Pleuels aufgesetzt ist.

Der obere Teil 12 des Pleuels ist über eine Dreh-
bzw. Schraubkeilverbindung mit dem unteren Teil 11
verbunden. Der obere Teil 12 des Pleuels weist einen
flachen Kopf 13 auf. Unterhalb dieses flachen Kopfes
13 ist der innere Rand der Membran 3 festgeklemmt
zwischen diesem Kopf 13 und dem Membranteller 14. Das
Schaftteil des oberen Teils 12 des Pleuels ist durch
eine mittige Öffnung der Membran 3 und durch eine
mittige Öffnung 15 des Membrantellers 14 geführt. Im
verrenkten Zustand der beiden Teile 11,12 des Pleuels
liegt die Oberseite des unteren Pleuelteils 11 gegen
die Unterseite des Membrantellers 14 an.

Der obere Teil 12 des Pleuels weist zwei diametral
zueinander quer zum Schaftteil verlaufende Keile
16 auf, die in Ausnehmungen 17 des unteren Teils
11 des Pleuels eingreifen. Das obere Ende des unteren
Pleuelteils 11 ist also zangenartig ausgebildet.

Die Öffnung 15 des Membrantellers 14 weist eine Form
entsprechend der Form des die Keile 16 aufweisenden
Schaftteiles auf, wie am besten der Fig. 4 entnehmbar
ist. Die Unterseite des Membrantellers 14 weist eine
Vertiefung 18 auf, welche der Form der Oberseite des
unteren Teils 11 des Pleuels entspricht. Wie der Fig.
4 entnehmbar, verlaufen die den Keilen 16 entsprechenden
Teile der Öffnung 15 rechtwinklig zur Vertiefung 18.

Am Gehäuse 1 sind im Bereich des Kompressorkopfes 2
Stehbolzen angeformt, welche den Kompressorkopf 2
durchdringen und deren Enden als Nietköpfe deformierbar sind. Nach Aufsetzen des Kompressorkopfes 2 auf das
Kompressorgehäuse 1 werden diese Köpfe deformiert,
wodurch der Kompressorkopf 2 mit dem Gehäuse 1 vernietet wird.

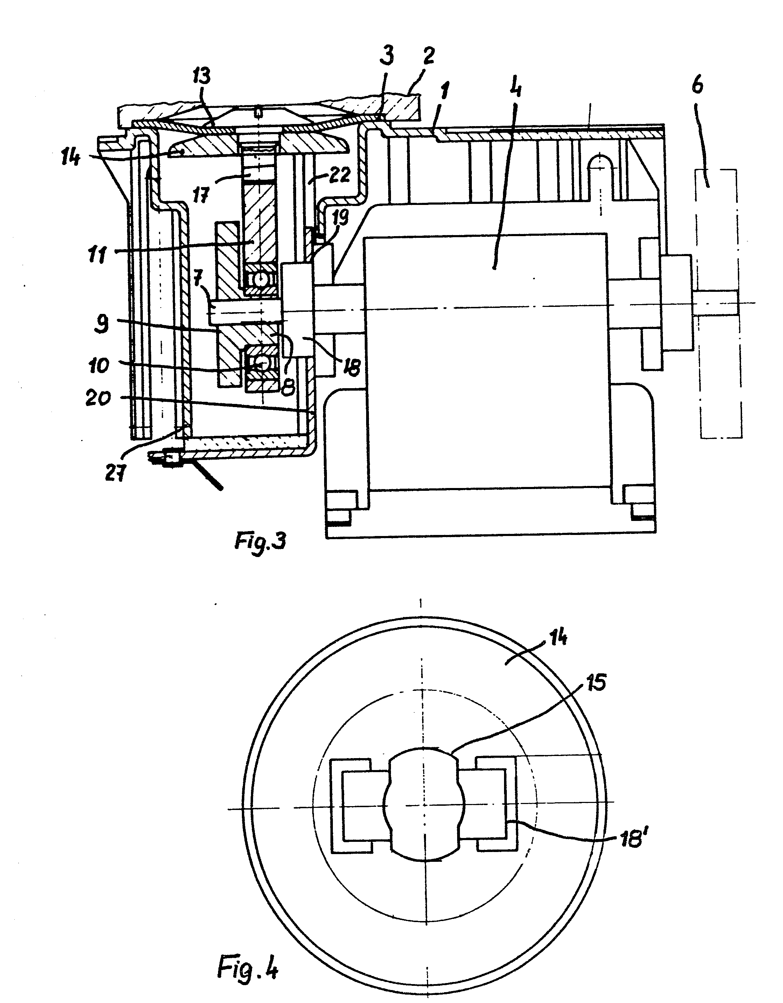

Wie der Fig. 3 entnehmbar ist, ist auf das vordere
Lagergehäuse 18 über eine Bohrung 19 eine Traverse 20
aufgepresst, wobei die Traverse 20 aus einem Winkelteil besteht. Die beiden Seiten der Traverse 20 beidseits der Bohrung 19 sind mit Prägungen 21 versehen.
Die Seiten der Traverse 20 mit den Prägungen 21 sind
jeweils mit ihren Seitenkanten in eine Nut 22 des Gehäuses 1 eingesetzt. Die Nuten 22 befinden sich an den
Seitenteilen des Gehäuses 1.

Das hintere Ende des Motors 4 wird gehalten durch zwei
Zungen 23 des Gehäuses 1, welche in Richtung der Motorwelle elastisch ausgebildet sind. Das Motorgehäuse
weist zu diesem Zweck einen Quersteg 24 auf, der
eine Vertiefung 25 besitzt, mit welcher eine Rastnase
26  an jeder der Zungen 23 verrastbar ist. Ein entsprechender Quersteg 24 ist an der Vorderseite des Motors 4 vorhanden, gegen welche die Traverse 20 anliegt.

Zur Montage des Membrankompressors und zu dessen Justierung
wird wie folgt vorgegangen:

Mittels der Bohrung 19 wird die Traverse 20 auf das Motorlagergehäuse 18 aufgepresst. Sodann wird die aus dem
unteren Pleuelteil 11 mit dem Kugellager 10 und dem

**0057735**

Exzenter 8 mit Masseausgleichscheibe 9 bestehende Baueinheit auf das vordere Motorwellenende 7 aufgesetzt und
bevorzugt durch eine Klebverbindung festgelegt. Der Motor
wird sodann mit diesen vorgenannten Bauteilen in das
Gehäuse 1 eingesetzt. Zu diesem Zweck werden die beiden
Seitenkanten der Traverse 20 mit ihren Prägungen 21
in die Nuten 22 eingeschoben. Zwischen den Nuten 22 und
den Seitenkanten der Traverse 20 besteht ein Preßsitz.
Gleichzeitig mit diesem Einschieben verrasten die Zungen
23 mit dem Quersteg 24 am hinteren Ende des Motors.

Nach diesem Einsetzen des Motors 4 in das Gehäuse 1
werden auf den unteren Teil 11 des Pleuels der Membranteller 14 und auf diesem die Membran 3 aufgesetzt, sodann wird der obere Teil 12 des Pleuels durch die
Membran und durch die Öffnung 15 des Tellers 14 hindurchgesteckt und um 90$^o$ gedreht. Bei dieser Drehung
kommen die Keile 16 in Eingriff in die Ausnehmungen
17 des Pleuelteils 11. Gleichzeitig wird die Membran 3
zwischen dem Kopf 13 und dem Teller 14 verspannt.

Durch die Vertiefung 18 an der Unterseite des Tellers 14
ist der Teller 14 verdrehsicher verbunden mit dem
Pleuel, was in gleicher Weise für die Membran 3 gilt.

Anschließend wird der Kompressorkopf 2 mit dem Gehäuse
1 verbunden, wodurch dann der äußere Rand der Membran 3
verdrehsicher zwischen Kopf 2 und Gehäuse 1 gehalten
wird. Die Montage des Kompressors ist nunmehr abgeschlossen.

Anschließend wird der Motor 4 an eine Stromquelle angeschlossen, also in Betrieb genommen, wodurch eine Messung des Betriebsverhaltens des Kompressors möglich ist. Entsprechen die Druck- und/oder Leistungswerte des Kompressors nicht den angestrebten Werten, dann ist es möglich, durch mehr oder weniger tiefes Einschieben der Traverse 20 in die Nuten 22 die Lage des Hubs der Membran 3 relativ zum Gehäuse 1 bzw. zum Kopf 2 einstellen zu können. Diese Einstellung erfolgt so weit, bis das optimale Betriebsverhalten des Kompressors erhalten wird. Durch mehr oder weniger tiefes Einschieben der Traverse 20 in die Nuten 22 ist ein Ausgleich sämtlicher Fertigungstoleranzen der eingangs genannten Art möglich. Da die Zungen 23 elastisch ausgebildet sind, ist es auch möglich, sämtliche Fertigungstoleranzen in Richtung der Motorachse ausgleichen zu können.

Das Gehäuse 1 weist eine zusätzliche Vorderwand 27 auf, wodurch erreicht wird, daß die Teile zwischen dem Wellenende 7 und der Membran 3 durch diese Gehäusewand 27 und die Traverse 20 umschlossen sind, wodurch die Geräuschentwicklung des Kompressors vermindert werden kann.

Es ist möglich, daß vordere Ende 7 zusätzlich in einer weiteren Traverse zu lagern, welche entsprechend der Traverse 20 mit dem Gehäuse 1 einsetzbar ist. In diesem Fall kann die Gehäusewand 27 entfallen.

Dipl.-Ing.
*Rolf Charrier*
Patentanwalt

Rehlingenstraße 8 · Postfach 260
D-8900 Augsburg 31
Telefon 08 21/3 60 15 + 3 60 16
Telex 53 3275
Postscheckkonto: München Nr. 1547 89-801

8227/06/Ch/Ha          -8-          Augsburg, den 3. Februar 1981

### Ansprüche

1. Membrankompressor, bei dem eine elastische Membran
   durch einen Pleuel auf- und abwärts bewegt wird,
   das Pleuel über einen Exzenter mit einer Motorwelle
   verbunden ist und die Membran und der Motor von einem
   Kompressorgehäuse gehalten werden, dadurch g e -
   k e n n z e i c h n e t ,daß der Motor (4) im Bereich
   des Pleuels (11,12) von mindestens einer Traverse
   (20) gehalten wird, diese Traverse (20) in das Gehäuse
   (1) in Richtung auf die Membran (3) einschiebbar ist,
   das Pleuel (11,12) zur Verbindung mit der Membran (3)
   zweigeteilt ausgebildet ist und die Traverse (20) justierbar in Richtung der Membran (3) einstellbar ist.

2. Membrankompressor nach Anspruch 1, dadurch g e k e n n -
   z e i c h n e t , daß das dem Pleuel (11,12) gegenüberliegende Ende des Motors (4) durch mindestens
   eine in Richtung der Motorwelle elastische Zunge
   (23) gehalten wird.

3. Membrankompressor nach Anspruch 1, dadurch g e k e n n -
   z e i c h n e t , daß die Traverse (20) aus einem
   Winkelteil besteht, das an einer Seite eine Bohrung
   (19) aufweist, in die das Lagergehäuse (18) für die
   Motorwelle mit Preßsitz eingreift und diese Seite
   des Winkelteils mit ihren beiden Seitenkanten in je einen Nut (22) des Gehäuses (1) eingreift, wobei
die Nutenbreite geringer ist als die Dicke der mindestens eine Prägung (21) aufweisenden Seitenkanten.

4. Membrankompressor nach einem der Ansprüche 1 bis 3,
   dadurch g e k e n n z e i c h n e t , daß die beiden
   Teile (11,12) des Pleuels über eine Renkverbindung
   (16,17) in Form einer Dreh- bzw. Schraubkeilverbindung
   miteinander verbunden sind, der obere mit einem flachen
   Kopf (13) versehene Teil (12) des Pleuels mit seinem
   Schaftteil durch eine  mittige Öffnung der Membran
   (3) und eine mittige Öffnung (15) eines Membrantellers
   (14) geführt ist, und im verrenkten Zustand die Oberseite des unteren Teils (11) des Pleuels gegen die Unterseite des Membrantellers (14) presst.

5. Membrankompressor nach Anspruch 4, dadurch g e k e n n -
   z e i c h n e t , daß der Schaftteil des oberen Teiles
   (12) des Pleuels zwei diametral zueinander quer zum
   Schaftteil verlaufende Keile (16) aufweist, die in
   Ausnehmungen (17) des unteren Teils (11) des Pleuels
   eingreifen, der Membranteller (14) eine der Form des
   die Keile (16) aufweisenden Schaftteils entsprechende
   Öffnung (15) besitzt, die Unterseite  des Membrantellers (14) eine der Form der  Oberseite des unteren
   Teils (11) des Pleuels entsprechende Vertiefung (18)
   aufweist, und die den Keilen (16) entsprechenden
   Öffnungsteile rechtwinklig zu dieser Vertiefung (18) verlaufen.

6. Membrankompressor nach einem der Ansprüche 1 bis 5, dadurch g e k e n n z e i c h n e t , daß der Exzenter
   (8) einstückig mit einer Massenausgleichscheibe (9) ist
   und mittels einer Klebeverbindung mit der Motorwelle (7) verbunden ist.

7. Membrankompressor nach einem der Ansprüche 1 bis
6, dadurch g e k e n n z e i c h n e t, daß das
Gehäuse (1) dem Membrankopf (2) durchdringende Stehbolzen aufweist, deren Enden als Nietköpfe deformierbar sind, in vernietetem Zustand der Rand der Membran
(3) zwischen Kopf (2) und Gehäuse (1) gehalten ist
und außerhalb des Randes der Membran (3) der Kopf (2)
in Kontakt mit dem Gehäuse (1) steht.

8. Verfahren zur Montage eines Membrankompressors
nach einem der Ansprüche 1 bis 7, dadurch g e -
k e n n z e i c h n e t, daß die Traverse (20) die
den Motor (4) trägt, auf dessen Welle (7) ein Exzenter
(8) mit dem Pleuel (11,12) und der Membran (3) angeordnet ist, in die Nuten (22) des Gehäuses (1) eingeschoben wird, durch Verbinden des Kompressorkopfes
(2) mit dem Gehäuse (1) der Rand der Membran (3)
zwischen diesen festgeklemmt wird, der Druck des
Kompressors durch Einschalten des Motors (4) geprüft und in Abhängigkeit dieses Druckes die Einschubtiefe der Traverse (20) verändert wird.

9. Verfahren nach Anspruch 8, dadurch g e k e n n -
z e i c h n e t, daß beim Einschieben der Traverse
(20) in das Gehäuse (1) die Motorwelle (7) nur den
unteren Teil (11) des Pleuels trägt und nach dem
Einschieben die Membran (3) und der Membranteller (14)
durch Verbinden der beiden Pleuelteile (11,12) mit
dem Pleuel verbunden werden.

1/2

Fig1

Fig2

0057735

Fig.3

Fig.4

**Europäisches Patentamt**

## EUROPÄISCHER RECHERCHENBERICHT

| | EINSCHLÄGIGE DOKUMENTE | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | F 04 B 45/04 H 02 K 7/14 |
| | US - A - 2 415 060 (CRAIG) <br> * Spalte 2, Zeilen 49-55; Spalte 3, Zeilen 1-9, 63-71; Figur 2 * | 1,4,6 | |
| | -- | | |
| | US - A - 3 694 112 (FREEDMAN) <br> * Spalte 5, Zeilen 36-46; Figur 3 * | 1,9 | |
| | -- | | |
| | FR - A - 948 386 (SOCIETE D'ETUDES) <br> * Seite 2, Zeilen 8-18; Figur 3 * | 4,7 | **RECHERCHIERTE SACHGEBIETE (Int. Cl.³)** <br><br> F 04 B <br> H 02 K |
| | -- | | |
| | DE - A - 2 903 386 (SIKO) <br> * Seite 6, Absatz 7; Seite 7, Absatz 2; Figur 2a * | 7 | |
| | -- | | |
| A | GB - A - 491 952 (TRICO) <br> * Insgesamt * | | |
| | -- | | |
| A | GB - A - 1 215 192 (HAMMERSTEIN) <br> * Seite 2, Zeilen 41-46, 59-64; Figur 2 * | | **KATEGORIE DER GENANNTEN DOKUMENTE** |
| | ---- | | X: von besonderer Bedeutung <br> A: technologischer Hintergrund <br> O: nichtschriftliche Offenbarung <br> P: Zwischenliteratur <br> T: der Erfindung zugrunde liegende Theorien oder Grundsätze <br> E: kollidierende Anmeldung <br> D: in der Anmeldung angeführtes Dokument <br> L: aus andern Gründen angeführtes Dokument |
| | US - P - 4242061 (HARTLEY) <br><br> GB - P - 784937 (GENERAL ELECTRIC COMPANY) | | |
| | | | &: Mitglied der gleichen Patentfamilie, übereinstimmendes Dokument |

Der vorliegende Recherchenbericht wurde für alle Patentansprüche erstellt.

| Recherchenort | Abschlußdatum der Recherche | Prüfer |
|---|---|---|
| Den Haag | 29-09-1981 | HEINLEIN |

EPA form 1503.1 06.78